# EUROPÄISCHE PATENTANMELDUNG

(11) **EP 0 943 820 A2**
(43) Veröffentlichungstag der Anmeldung: **22.09.1999**
(21) Anmeldenummer: 99104458.7
(22) Anmeldetag: 04.03.1999
(51) Int. Cl.: F16B 12/12, F16B 12/24

(54) **Beschlagsystem und Beschlagmittel dafür**

(30) Priorität: 07.08.1998 DE 29814186 U; 05.03.1998 DE 29803857 U; 04.03.1999 DE 19909396
(71) Anmelder: Strauss, Rainer, 76863 Herxheim (DE)
(72) Erfinder: Strauss, Rainer, 76863 Herxheim (DE)
(74) Vertreter: Pietruk, Claus Peter, Dipl.-Phys.

(57) **Zusammenfassung**

Das Beschlagsystem zum Verbinden von Werkstücken, zur Konstruktion und Ausstattung von Möbeln, Gebrauchsgegenständen, Inneneinrichtungen und dergleichen, bedient sich eines mehrfachfunktionalen Beschlagmittels in Form eines Zapfens mit kreisförmigem Querschnitt, insbesondere eines Flaschenkorkens, der in einer seinem Querschnitt angepaßten Ausnehmung eines ersten Bauteils aufgenommen ist und mit einem über das erst Bauteil vorstehenden Abschnitt in eine mit der Ausnehmung des ersten Bauteils fluchtende Ausnehmung eines zweiten Bauteils eingreift.

## Beschreibung

Die Erfindung bezieht sich auf ein Beschlagsystem zum Verbinden von Bauteilen, zur Konstruktion und Ausstattung von Möbeln, Gebrauchsgegenständen, Inneneinrichtungen und dergleichen, ferner auf Beschlagmittel zur Verwendung bei diesem Beschlagsystem.

Beschlagmittel der vorgenannten Art und Zweckbestimmung sind bekannt. Derartige Beschlagmittel werden in Anpassung an den jeweiligen Verwendungszweck in aller Regel aus Kunststoffen oder Metallen, aber auch aus Materialkombinationen, hergestellt, und sind vielfach auch mit Oberflächenbeschichtungen versehen. Die Herstellung derartiger Beschlagmittel ist aufwendig und teuer. Insbesondere problematisch ist jedoch die Entsorgung, was zumeist über den Hausmüll erfolgt.

Bei der Entsorgung derartiger Beschlagmittel und einer etwaigen Wiederverwertung zu Rohrstoffen bedarf es einer sorgfältigen Trennung der verschiedenen Materialien. Dies ist insbesondere bei Materialkombinationen problematisch und vielfach nicht möglich. So sind beispielsweise in plattenförmigen Bauteilen häufig Kunststoffspreizmuffen fest verankert, die zum Eindrücken und/oder Einschrauben von Beschlagmitteln dienen und entweder überhaupt nicht oder allenfalls mit erheblichem manuellen Aufwand entfernbar sind.

Angesichts dieses Standes der Technik besteht die der Erfindung zugrunde liegende Aufgabe in der Schaffung eines Beschlagsystems der eingangs angegebenen Art und Zweckbestimmung, das bei einfacher Handhabbarkeit beim Verbinden von Bauteilen, bei der Konstruktion und Ausstattung von Möbeln, Gebrauchsgegenständen, Inneneinrichtungen und dergleichen einsetzbar ist und eine hohe Anwendungsvielfalt ermöglicht.

Gelöst wird diese Aufgabe bei dem Beschlagsystem nach dem Oberbegriff des Patentanspruchs 1 durch ein mehrfach funktionales Beschlagmittel in Form eines Zapfens mit kreisförmigem Querschnitt, insbesondere eines Flaschenkorkens, der in eine Ausnehmung eines ersten Bauteils aufgenommen ist, wobei sich der Zapfen-Querschnitt der Ausnehmung anpassen kann, und mit einem über das erste Bauteil vorstehenden Abschnitt in eine mit der Ausnehmung des ersten Bauteils fluchtende Ausnehmung eines zweiten Bauteils eingreift.

Das erfindungsgemäße Beschlagsystem beruht auf höchst einfachen Beschlagmitteln, bei denen es sich um neue oder gebrauchte Flaschenkorken aus Korkmaterial oder Kunststoff handeln kann, die aber auch aus Papier, Recycling-Material oder aus Verbundwerkstoffen hergestellt sein können. Die Handhabbarkeit ist gut und die industrielle Herstellung sehr leicht zu bewerkstelligen und insbesondere bei der Verwendung von Beschlagmitteln aus Korkmaterial, Papier oder sonstigen verrottbaren Materialien ist eine problemlose Entsorgung gewährleistet.

Die in den Bauteilen vorzusehenden Ausnehmungen für die Aufnahme des jeweiligen Beschlagmittels können grundsätzlich beliebig gestaltet sein. Als besonders vorteilhaft hat sich jedoch die Ausbildung dieser Ausnehmungen als Bohrungen erwiesen, die in einfacher Weise in die Bauteile einbringbar sind.

In Anpassung an den jeweiligen Bedarfsfall können insbesondere bei platten- oder leistenförmigen Bauteilen die Ausnehmungen im ersten und zweiten Bauteil als Durchgangsbohrungen ausgebildet sein. Der die Durchgangsbohrungen der Bauteile durchdringende Zapfen kann dabei jeweils auf der vom anderen Bauteil abgewandten Seite eines Bauteils vorstehen und auf den vorstehenden Zapfenabschnitten können Sicherungsmittel aufgenommen sein, wie Sprengringe, Gummiringe oder auf die überstehenden Zapfenabschnitte aufgeschraubte Muttern. Beim Aufschrauben von Muttern und dergl. ist es besonders vorteilhaft, wenn sich der Zapfenquerschnitt einerseits der Mutter anpaßt und andererseits der Ausnehmung, in welche der Zapfen eingebracht ist. Diese Anpassung wird erreicht durch die Nachgiebigkeit, also Elastizität, des Zapfens einerseits, die ein einfaches Aufschrauben der Mutter ohne überhöhten Kraftaufwand auf den Zapfen ermöglicht, und andererseits durch die gleichzeitige Kompressibilität, die es auch erlaubt, den Zapfen leicht in eine Ausnehmung einzudrücken.

Auf diese Weise gelingt eine einfache, aber höchst wirksame Verbindung beispielsweise plattenförmiger Bauteile, die unmittelbar in Kontaktflächen aneinanderliegen oder auch beabstandet voneinander fixiert sind, etwa durch jeweils ein auf einem die Durchgangsbohrungen als Beschlagmittel durchdringenden Zapfen aufgenommenes Distanzmittel. Bei den Distanzmitteln kann es sich um Hülsen oder dergleichen handeln.

Eine andere wichtige Ausgestaltung des Beschlagsystems sieht vor, daß der das Beschlagmittel bildende Zapfen zumindest in der Bohrung eines der Bauteile mit Preßsitz aufgenommen ist. Ein solcher Preßsitz wird mit als Korken ausgebildeten Zapfen besonders leicht realisiert und führt zu einer leichten Zusammenfügbarkeit von Bauteilen, die mittels der erfindungsgemäßen Beschlagmittel verbunden werden, weil der Kork nicht nur deformierbar, sondern auch komprimierbar ist.

Bei einer derartigen Ausgestaltung des Beschlagsystems kann der das Beschlagmittel bildende Zapfen, etwa ein Flaschenkorken, in die Bohrung eines der Bauteile mit begrenztem Spiel eingreifen und dadurch dieses Bauteil gegenüber dem anderen Bauteil um den Zapfen als Drehachse drehbar lagern. Auf diese Weise gelingt beispielsweise die schwenkbare Anlenkung einer Flügeltür an einen Möbelkorpus.

Eine verbesserte schwenkbare Anlenkung eines Bauteils an ein anderes Bauteil wird erreicht, wenn gemäß einer Weiterbildung der Erfindung in der Bohrung eines der Bauteile ein Lagerelement, etwa ein Kugel- oder Rollenlager, aufgenommen ist, und dieses auf dem in die Bohrung eingreifenden Abschnitt des das Beschlagmittel bildenden Zapfens aufgenommen ist.

Eine abermalige Weiterbildung der Erfindung sieht vor, daß in wenigstens einem der Bauteile die den Zapfen als Beschlagmittel aufnehmende Bohrung bzw. die Bohrung, in die der vom anderen Bauteil vorstehende Zapfenabschnitt eingreift, als Sacklochbohrung ausgebildet ist.

Dieser Lösungsvariante der Erfindungsaufgabe kommt insbesondere dann Bedeutung zu, wenn ein Bauteil mit einem Stirnende an ein anderes Bauteil angeschlossen werden soll. Dabei kann die Dicke des stirnseitig anzuschließenden Bauteils durchaus kleiner sein als der Durchmesser des Beschlagmittels, in welchem Falle die Bohrung symmetrisch zur Dicke des Beschlagmittels stirnendig in das genannte Bauteil einzubringen ist und das Beschlagmittel dann im Bereich der Sacklochbohrung beidseitig über die Flachseiten des Bauteils vorsteht.

Bei einer gleichfalls wichtigen Weiterbildung der Lösungsvariante, bei der das Beschlagmittel in einer Bohrung eines Bauteils mit Preßsitz aufgenommen ist, dient der von diesem Bauteil vorstehende Abschnitt des Zapfens als Auflager für einen Fachboden. Ein derartiger Fachboden kann unmittelbar auf dem von dem genannten Bauteil vorstehenden Abschnitt des das Beschlagmittel bildenden Zapfens aufliegen, oder aber in eine der Zapfenkontur angepaßte unterseitige Ausfräsung des Fachbodens eingreifen.

Eine abermalige sinnvolle Weiterbildung der Erfindung ist durch die Verbindung eines rohrförmigen Bauteils, etwa einer Kleiderstange, mit einem anderen Bauteil gekennzeichnet, indem ein in einer Bohrung des letztgenannten Bauteils mit Preßsitz aufgenommener Zapfen als Beschlagmittel mit einem Abschnitt von dem genannten Bauteil vorsteht und stirnseitig in das rohrförmige Bauteil eingreift.

Das erfindungsgemäße Beschlagmittel ist jedoch nicht nur als Mittel zum Verbinden von Bauteilen einsetzbar, sondern auch als Sicherungsmittel. So ist eine Weiterbildung der Erfindung durch die Verwendung des Zapfens als Sicherungsmittel einer Steckverbindung eines ersten und zweiten Bauteils gekennzeichnet, indem der Zapfen in einer im Bereich der Steckverbindung angeordneten Bohrung des einen Bauteils aufgenommen ist und zumindest abschnittsweise in Bohrungsbereiche eingreift, die sich im zweiten Bauteil erstrecken.

Im Rahmen der Erfindung kann der das Beschlagmittel bildende Zapfen auch mit einer zentralen Längsausnehmung versehen sein und in der Längsausnehmung kann ein versteifender Zapfen aufgenommen sein, der auch stirnendig über den Zapfen vorstehen und beispielsweise zum Anhängen irgendwelcher Gegenstände dienen kann.

Der das Beschlagmittel bildende Zapfen kann jedoch auch als Spreizelement ausgebildet sein, so daß über das Einpressen des Zapfens beispielsweise mit Preßsitz in eine Bohrung hinaus ein wirksames Verspannen des Zapfens mit den Wandungen einer den Zapfen aufnehmenden Bohrung gelingt.

Bei dem Spreizmittel kann es sich um eine durch die Längausnehmung im Zapfen hindurcherstreckende, mit einem Kopf an einem Zapfenstirnende sich abstützende Spannschraube und um einen mittels dieser Spannschraube vom anderen Zapfenstirnende aus in die Längsausnehmung einziehbaren Spannkonus handeln, der in Abhängigkeit vom Einziehen in die Längsausnehmung eine radiale Aufweitung des Zapfens bewirkt.

Als Spreizmittel kann aber auch ein konischer Spannzapfen dienen, der von einer Zapfenstirnseite aus in die sich durch den Zapfen hindurcherstreckende Längsausnehmung eintreibbar ist.

Eine andere Ausbildung des das Beschlagmittel bildenden Zapfens als Spreizelement sieht vor, daß als Spreizmittel ein Doppelkeil mit zwei Spreizkörpern dient, die mit in Längsrichtung gegenläufig ansteigenden Keilflächen aneinander anliegen und von entgegengesetzten Stirnenden des Zapfens aus in dessen Längsausnehmung eintreibbar sind.

Bei einer nochmals anderen Ausbildung des Zapfens als Spreizelement umfaßt das Spreizmittel eine in der Längsausnehmung des Zapfens aufgenommene Spreizhülse, die im Mittelteil mit Längsschlitzungen und auf einer Seite von den Längsschlitzungen mit einer axialfest in der Spreizhülse angeordneten Mutter ausgerüstet ist, ferner eine sich durch die Spreizhülse hindurcherstreckende Spannschraube, die in die Mutter der Spreizhülse eingeschraubt ist und sich mit einem Schraubenkopf an dem von der Mutter abgewandten Zapfenstirnende abstützt.

Wenn bei einem so ausgebildeten Spreizelement mittels einer Spannschraube die Spreizhülse axial gegenüber dem den Schraubenkopf abstützenden Zapfenstirnende verspannt wird, erfahren die Stege zwischen den Längsschlitzungen im Mittelteil eine radial nach außen gerichtete Verformung und damit der Zapfen eine radiale Aufweitung.

Im Rahmen der Erfindung kann der das Beschlagmittel bildende Zapfen auch mit einem Excenter versehen und drehbar in einer angepaßten Ausnehmung eines Bauteils derart aufgenommen sein, daß in Abhängigkeit von der Drehstellung des Zapfens dessen Excenter mehr oder weniger über eine stirnendige Begrenzung des genannten Bauteils vorsteht und mit einem angrenzenden Bauteil verspannbar ist. Beispielsweise könnten mittels derartiger Excenter-Beschlagmittel Präsentationswände im Messebau verspannt werden.

Anhand der beigefügten Zeichnungen sollen nachstehend Verbindungen von Bauteilen unter Verwendung von Verbindungsmitteln in Form von Kork-Zapfen sowie die Ausbildung derartiger Verbindungszapfen erläutert werden. In schematischen Ansichten zeigen:
- Fig. 1: einen Kreisquerschnitt aufweisenden Kork-Zapfen in einer seitlichen Ansicht,
- Fig. 2: eine stirnseitige Ansicht des Kork-Zapfens gemäß Fig. 1,
- Fig. 3: ein mit einer dem Querschnitt des Kork-Zapfens angepaßten Bohrung versehenes Bauteil,
- Fig. 4: ein mit einer der Konfiguration des Kork-Zapfens angepaßten Ausnehmung versehenes Bauteil in einer Seitenansicht,
- Fig. 5: das Bauteil gemäß Fig. 4 in einer Draufsicht,
- Fig. 6: die Verbindung des Bauteils nach den Fig. 4 und 5 mit dem in Fig. 3 gezeigten Bauteil mittels des Kork-Zapfens nach den Fig. 1 und 2 in einer Seitenansicht,
- Fig. 7: in einer Ansicht ähnlich wie Fig. 6 die stirnseitige Verbindung eines leistenförmigen Bauteils mit einem anderen leistenförmigen Bauteil,
- Fig. 8: die Bauteilverbindung nach Fig. 7 in einer Draufsicht,
- Fig. 9: die Festlegung eines plattenförmigen Bauteils an einem anderen Bauteil in einer seitlichen Ansicht,
- Fig.10: die gelenkige Anlenkung eines plattenförmigen Bauteils an ein anderes Bauteil in einer Draufsicht,
- Fig.11: die Verbindung eines rohrförmigen Bauteils, etwa einer Kleiderstange, mit einem plattenförmigen Bauteil,
- Fig.12: die Aufnahme eines Fachbodens auf einem in einer Bohrung einer Seitenwange aufgenommenen und von dieser seitlich vorstehenden Kork-Zapfen,
- Fig.13: einen Ausschnitt des Fachbodens nach Fig. 12 in einer stirnseitigen Ansicht,
- Fig.14: eine Draufsicht auf eine mittels eines Kork-Zapfens gesicherte Steckverbindung plattenförmiger Bauteile,
- Fig. 15: ein unter Verwendung von Kork-Zapfen als Verbindungsbeschlagmittel aufgebautes Regal in einer Seitenansicht,
- Fig.16: einen im Bereich seiner Enden mit Sprengringen ausgerüsteten Kork-Zapfen in einer seitlichen und einer stirnendigen Ansicht,
- Fig.17: in Ansichten wie in Fig. 16 einen im Bereich seiner Enden mit Gummiringen bestückten Kork-Zapfen,
- Fig.18: ebenfalls in Ansichten wie in den Fig. 16 und 17 einen Kork-Zapfen mit einem auf diesem aufgenommenen Nadellager,
- Fig.19: einen Kork-Zapfen mit einem im Bereich eines Endes auf dem Zapfen aufgenommenen Rillen-Kugellager in einer seitlichen und stirnendigen Ansicht,
- Fig.20: ebenfalls in einer seitlichen und stirnendigen Ansicht einen Kork-Zapfen mit endseitig auf diesen aufgeschraubten Muttern,
- Fig.21: einen mit einer zentralen Längsausnehmung versehenen Kork-Zapfen und einen in die Längsausnehmung des Zapfens zu dessen Versteifung eintreibbaren Kern in einer seitlichen Ansicht,
- Fig.22: einen tailliert ausgebildeten Kork-Zapfen in einer seitlichen Ansicht,
- Fig.23: die Verbindung von zwei Bauteilen mittels des Kork-Zapfens nach Fig. 22,in einer Schnittansicht,
- Fig.24: einen abgestuften Kork-Zapfen in einer seitlichen und einer stirnendigen Ansicht,
- Fig.25: eine beabstandete Verbindung von zwei Bauteilen mittels des Kork-Zapfens nach Fig. 24 in einer Schnittansicht,
- Fig.26: einen mit umlaufenden und axial voneinander beabstandet angeordneten Ringwulsten Versehenen Kork-Zapfen in einer seitlichen Ansicht,
- Fig.27: eine Verbindung von zwei Bauteilen, mittels des Kork-Zapfens nach Fig. 26 in einer Schnittansicht,
- Fig.28: einen mit peripheren und gleichmäßig über den Zapfen-Umfang verteilt angeordneten Längsschlitzen ausgerüsteten Zapfen aus festem Material in einer seitlichen und stirnendigen Ansicht,
- Fig.29: den Zapfen nach Fig. 28 mit in den peripheren Längsschlitzen aufgenommenen Kompressionslamellen in einer seitlichen und stirnendigen Ansicht,
- Fig.30: einen als Spreizelement ausgebildeten Kork-Zapfen mit einer sich durch eine zentrale Zapfen-Längsausnehmung hindurcherstreckenden Spannschraube und einem mittels der Spannschraube in die Längsausnehmung hineinziehbaren Spannkonus in einer Längsschnittansicht,
- Fig.31: in einer Ansicht wie in Fig. 30 einen als Spreizelelement ausgebildeten Kork-Zapfen mit zwei in eine zentrale Zapfen-Längsausnehmung eintreibbaren, in gegensinnig ansteigenden Keilflächen aneinander anliegenden Spreizkörpern,
- Fig.32: ebenfalls in einer Ansicht wie in den Fig. 30 und 31 einen als Spreizelement ausgebildeten Kork-Zapfen mit einem in eine zentrale Zapfen-Längsausnehmung eintreibbaren konischen Spannzapfen als Spreizmittel,
- Fig.33: wiederum in einer Ansicht wie in den Fig. 30 bis 32 einen als Spreizelement ausgebildeten Kork-Zapfen mit einer in einer zentralen Zapfen-Längsausnehmung aufgenommenen Spreizhülse,
- Fig.34: eine Möglichkeit, mittels eines exzentrischen Korken-Beschlagmittels das Verspannen eines Werkstücks gegen über einem anderen Werkstück und
- Fig.35: einen der Schnittlinie XXXV-XXXV in Fig. 34 entsprechenden Schnitt durch das Werkstück mit dem in einer entsprechenden Ausnehmung aufgenommenen exzentrischen Korkenbeschlagmittel.

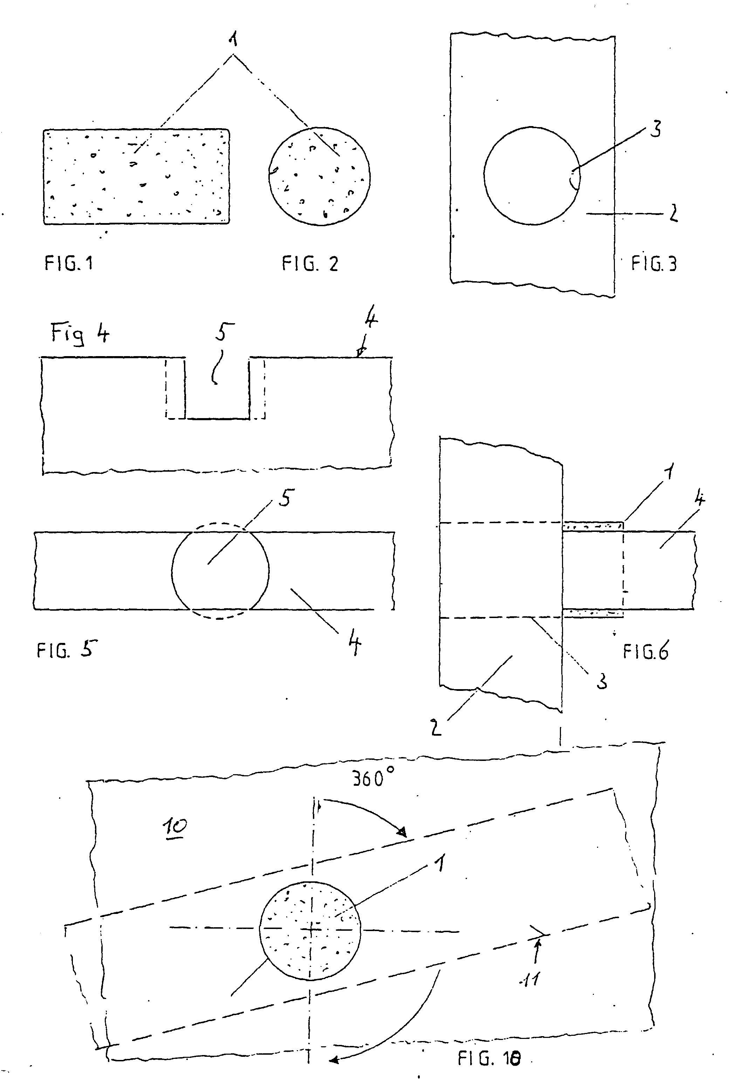

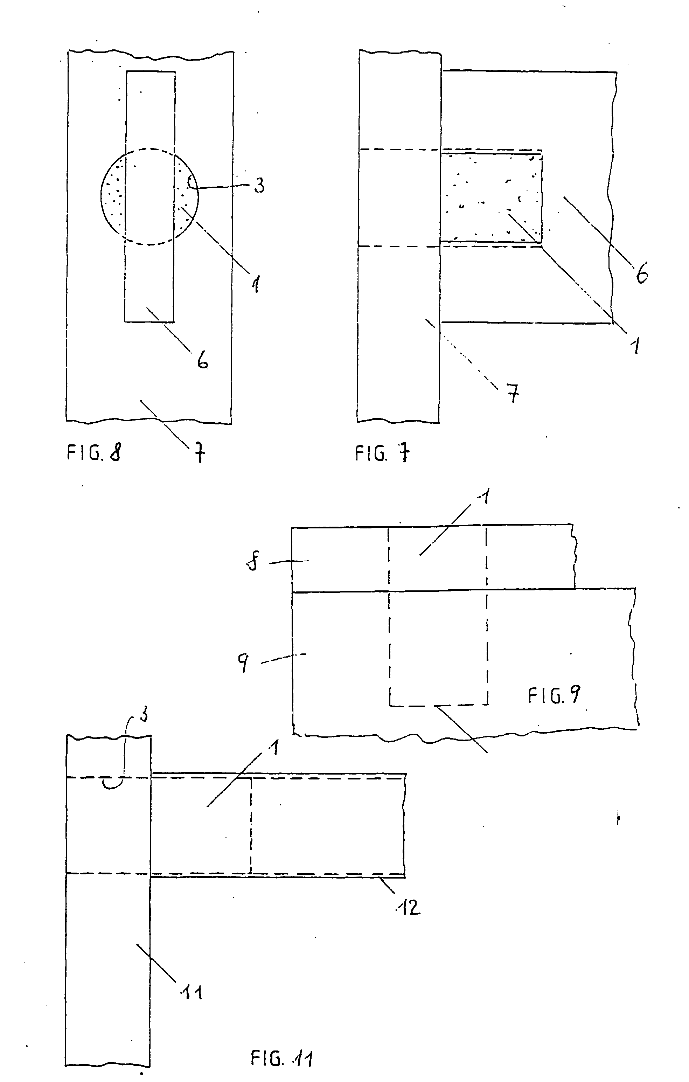

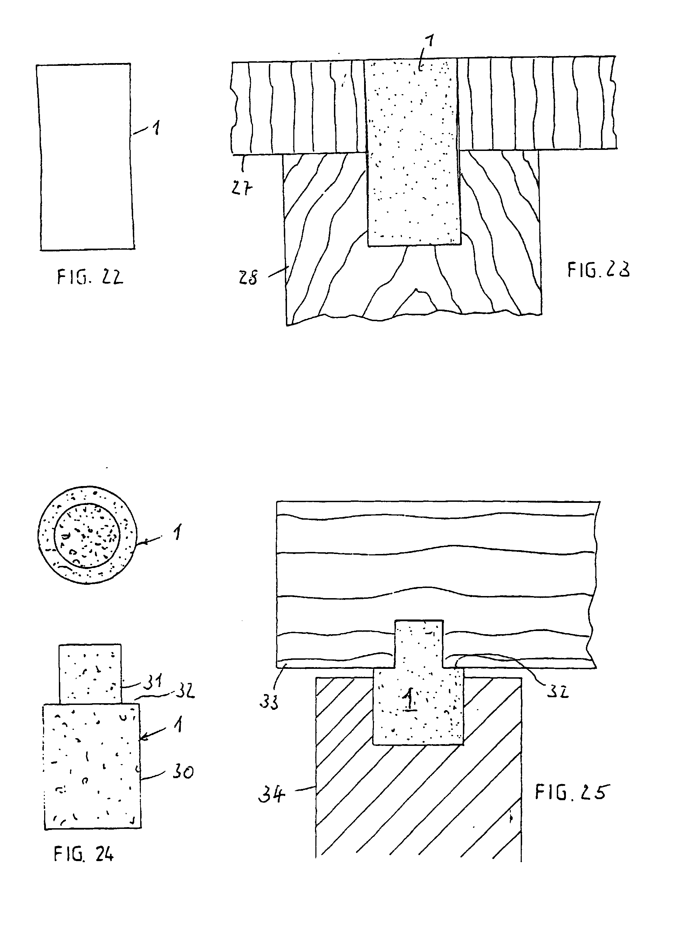

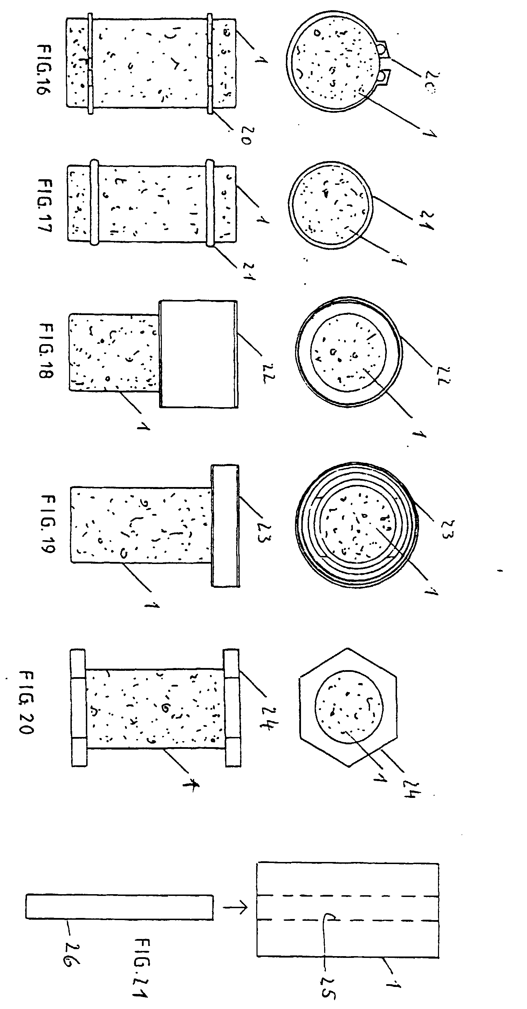

Bei dem in den Fig. 1 und 2 veranschaulichten Beschlagmittel handelt es sich um einen herkömmlichen Flaschenkorken 1 mit kreiszylindrischem Querschnitt und einer etwa dem zweifachen Durchmesser entsprechenden Länge. Derartige Korken 1 sind in vielfältiger Weise als Beschlagmittel einsetzbar, etwa derart, daß ein vorbestimmter Längenabschnitt des Korkens 1 mit Preßsitz in eine sich in einem Bauteil 2 erstreckende Bohrung 3 eingepreßt wird und der von dem Bauteil vorstehende Abschnitt des Korkens 1 in eine sich in einem anderen Bauteil erstrekkende Ausnehmung eingreift.

Die Fig. 4 und 5 zeigen ein leistenförmiges Bauteil 4 mit einer dem Korken 1 angepaßten sacklochartigen Ausnehmung 5, die sich von einer Schmalseite aus in das Bauteil 4 hineinerstreckt und einen die Bauteildicke übersteigenden Durchmesser hat.

In Fig. 6 ist die Verbindung des leistenförmigen Bauteils 4 mit dem Bauteil 2 nach Fig. 3 unter Verwendung des Korkens 1 als Beschlagmittel dargestellt. Der Korken 1 ist in der sich im letztgenannten Bauteil erstreckenden Bohrung 3 mit Preßsitz aufgenommen und greift in die als Sacklochbohrung ausgebildete Ausnehmung 5 des Bauteils 4 ein. Da der Durchmesser der Ausnehmung 5 die Dicke des leistenförmigen Bauteils 4 übersteigt, steht der Korken 1, wie Fig. 6 veranschaulicht, im Bereich der sacklochartigen Ausnehmung 5 auf beiden Seiten des leistenförmigen Bauteils 5 vor.

Mittels der vorstehend in Verbindung mit den Fig. 4 bis 6 erläuterten Verbindungstechnik gelingt auch problemlos der stirnendige Anschluß eines leistenförmigen Bauteils 6 an ein anderes Bauteil 7 mittels eines Korkens 1 als Verbindungs-Beschlagmittel. Analog zu den Fig. 4 bis 6 zeigen dies die Fig. 7 und 8.

In Fig. 9 hingegen ist die Verbindung von zwei plattenförmigen Bauteilen 8,9 veranschaulicht, die flächenhaft aneinander liegen und miteinander fluchtende Bohrungen aufweisen, in die als Beschlagmittel ein Korken 1 eingepreßt ist, der sich über die Kontaktfläche zwischen den beiden Bauteilen 8,9 hinwegerstreckt.

Mittels derartiger Korken 1 als Beschlagmittel sind aber auch gelenkige Verbindungen zwischen Bauteilen 10, 11 verwirklichbar, was in Fig. 10 angedeutet ist. Der als Beschlagmittel dienende Korken 1 ist mit einem Teil seiner Längenerstreckung in eine dem Querschnitt des Korkens angepaßte Bohrung in dem ersten Bauteil 10 aufgenommen und greift mit begrenztem Spiel in eine sich von einem Stirnende aus in das andere Bauteil 11 hineinerstreckende Sacklochbohrung ein. Dadurch ist das zweite Bauteil 11 gegenüber dem ersten Bauteil 10 um den von dem Korken 1 gebildeten Lagerzapfen verschwenkbar.

Flaschenkorken 1 als Beschlagmittel sind auch beispielsweise zur Festlegung einer rohrförmigen Kleiderstange an einer Seitenwange eines Schranks einsetzbar. So zeigt Fig. 11 die Aufnahme eines einseitig über eine Seitenwange 11 vorstehenden Korkens 1 mit Preßsitz in einer die Seitenwange durchdringenden Bohrung 3 und der vorstehende Abschnitt des Korkens 1 greift stirnendig in eine rohrförmige Kleiderstange 12 ein. Dadurch ist eine präzise, jedoch in einfacher Weise demontierbare Festlegung einer derartigen Kleiderstange 12 gewährleistet.

Anstelle einer Kleiderstange kann auf einem von einer Seitenwange 11 seitlich vorstehenden Abschnitt eines in eine Bohrung der Seitenwange 11 eingepreßten Korkens 1 auch als Auflager eines Fachbodens 13 dienen, was in Fig. 12 veranschaulicht ist. Zweckmäßigerweise sind derartige Fachböden 13 mit unterseitig angeordneten sacklochartig ausgebildeten Ausfräsungen 14 versehen, in die der vorstehende Abschnitt des Korkens 1 bei aufliegendem Fachboden 13 eingreift und dadurch diesen in seiner Lage sichert.

Fig. 14 zeigt die Verbindung von zwei Bauteilen 15, 16, wobei das Bauteil 15 mit zwei stirnendig beabstandet voneinander vorstehenden Zapfen 17 in entsprechend der Zapfenanordnung voneinander beabstandete Ausnehmungen 18 des anderen Bauteils 16 eingreift. Ein Mittelzapfen 19 des Bauteils 16 ist mit einer dessen Dicke übersteigenden Bohrung 3 versehen, die beidseitig über den mittleren Steckzapfen 19 hinausreicht und in der Art von Kreisabschnitten auch die beiden Steckzapfen 17 des anderen Bauteils 15 erfaßt. Ein in die Bohrung 3 eingepreßter Kork-Zapfen 1 vermittelt somit eine formschlüssige, jedoch lösbare Verbindung der Steckzapfen beider Bauteile 15, 16 und damit der Bauteile selbst.

In Fig. 15 ist unter Verwendung von Kork-Zapfen 1 als Verbindungs-Beschlagmittel der Aufbau eines ansonsten nicht interessierenden Regals 20 veranschaulicht.

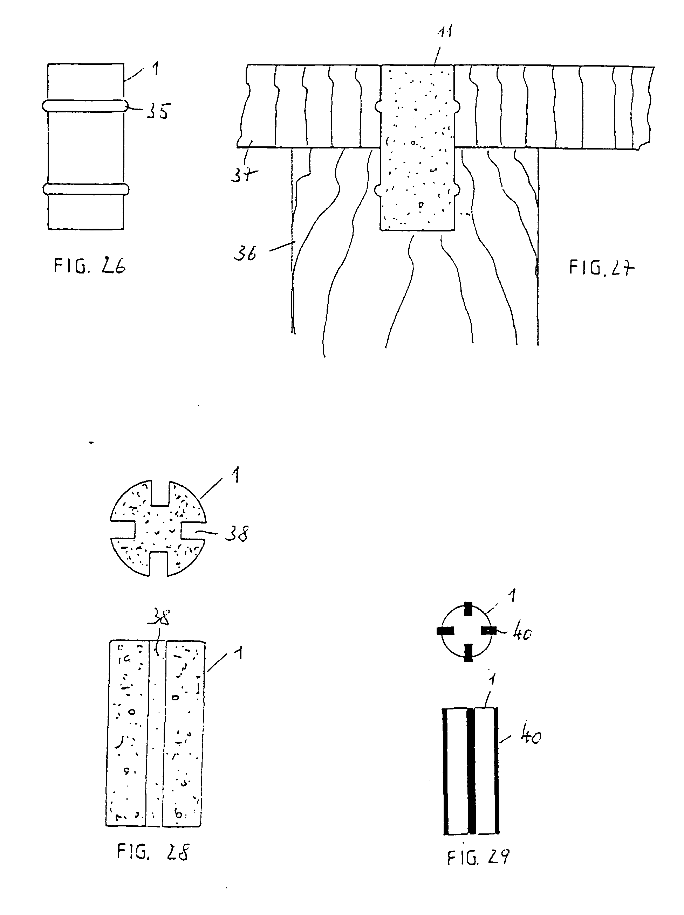

Der in Fig. 16 veranschaulichte Korken 1 ist im Bereich seiner beiden Enden mit Sprengringen 20 ausgerüstet, die unter einer gewissen Vorspannung auf dem Korken 1 aufgenommen sind. Anstelle derartiger Sprengringe 20 können auch, wie Fig. 17 zeigt, auf dem Korken 1 im Bereich seiner beiden Enden Gummiringe 21 aufgenommen sein.

Derartigen Sicherungsmitteln in Form von Sprengringen 20 oder Gummiringen 21 kommt beispielsweise dann Bedeutung zu, wenn auf dem sich zwischen den Springringen 20 bzw. Gummiringen 21 erstreckenden Bereich des Korken 1 zwei Bauteile gelagert sind, die mittels der Sprengringe 20 oder Gummiringe 21 in ihren bestimmungsgemäßen Lagen gehalten werden.

Für die Ausbildung von Lagerzapfen für die verschwenkbare Anlenkung eines Bauteils an ein anderes Bauteil können die Korken 1 auch mit einem Lagerelement, etwa einem Nadellager 22 oder einem Rollenlager 23 bestückt sein, wie die Fig. 18 und 19 zeigen. Bei bestimmungsgemäßer Verwendung sind die Außenringe derartiger Lagerelemente 22, 23 in der Bohrung eines Bauteils aufgenommen und der in eine Bohrung des anderen Bauteils eingreifende Korken 1 ist drehfest, etwa mit Preßsitz, im Innenring eines Lagerelements 22, 23 aufgenommen, wodurch eine reibungsarme Verdrehbarkeit der beiden aneinander angelenkten Bauteile gewährleistet ist.

In Fig. 20 ist, analog zu den Fig. 16 und 17, eine axiale Sicherung von auf dem Korken 1 aufgenommenen Bauteilen dadurch verwirklicht, daß auf die stirnendigen Abschnitte des Korkens 1 Muttern 24 aufgeschraubt sind.

Fig. 21 veranschaulicht einen mit einer zentralen Längsausnehmung 25 versehen Kork-Zapfen 1 sowie einen in die genannte Längsausnehmung eintreibbaren Kern 26, der beispielsweise aus Hartholz bestehen kann und die Quersteifigkeit des Kork-Zapfens nachhaltig verbessert. Dies führt bei der Verwendung des Kork-Zapfens 1 beispielsweise als Element zum Verbinden zweier Bauteile zu einer erhöhten Scherfestigkeit im Bereich der Kontaktflächen zwischen den Bauteilen.

Anstelle eines mit den Stirnenden des Kork-Zapfens 1 abschließenden Kerns 26 können auch auf wenigstens einer Seite über den Kork-Zapfen 1 vorstehende Kerne eingesetzt werden, die auch an ihrem vorstehenden Ende radial überstehende Kopfteile aufweisen können. Mittels so ausgebildeter Kork-Zapfen mit über ein Stirnende vorstehenden Kernen gelingt in einfacher Weise der Aufbau beispielsweise einer Garderobe.

In Fig. 22 ist ein tailliert ausgebildeter Kork-Zapfen 1 dargestellt, der beispielsweise in der aus Fig. 23 ersichtlichen Weise zum Verbinden von Bauteilen 27, 28 geeignet ist, die in einer Kontaktfläche aneinander anliegen. Die taillierte Ausbildung des Kork-Zapfens 1 bewirkt nach dem Einpressen in die Aufnahmebohrungen der beiden Bauteile, daß diese unter Vorspannung in ihrer Kontaktfläche in Anlage gehalten werden.

Der in Fig. 24 veranschaulichte Kork-Zapfen 1 besitzt zwei Zapfenabschnitte 30, 31 unterschiedlichen Durchmessers, die durch eine unmlaufende Ringschulter 32 voneinander getrennt sind. Derartige Kork-Zapfen eignen sich beispielsweise zur beabstandeten Verbindung von zwei Bauteilen 33, 34, wie dies Fig. 25 veranschaulicht. Dabei ist der größeren Durchmesser aufweisende Zapfenabschnitt 30 in einer Sacklochbohrung des Bauteils 34 aufgenommen und steht um ein gewünschtes Maß axial über die Stirnfläche dieses Bauteils vor. Der geringere Durchmesser aufweisende Zapfenabschnitt 31 greift in eine Sacklochbohrung des anderen Bauteils 33 ein und die diese Sacklochbohrung umgebenen Ränder der zu dem erstgenannten Bauteil 34 hinweisenden Fläche, von der die Sacklochbohrung in das zweite Bauteil eingebracht ist, liegt auf der zwischen den beiden Zapfenabschnitten 30, 31 umlaufenden Schulter 32 des Kork-Zapfens auf.

Einer so ausgebildeten Bauteilverbindung kommt Bedeutung zu, wenn die Übertragung von Körperschall von einem Bauteil auf das andere Bauteil minimiert werden soll. Der gleiche Effekt kann auch bei Verwendung zylindrisch ausgebildeter Korkzapfen erreicht werden, indem auf dem Korken ein Dämpfungselement, beispielsweise eine Gummischeibe, aufgenommen ist, mittels der die einander zugewandten Flächen der miteinander verbundenen Bauteile getrennt sind. Bei der Ausbildung eines Regals mit dem erfindungsgemäßen Beschlagmittel wird eine Körperschallisolierung der Bretter gegeneinander aber allgemein bereits dann erreicht, wenn wenigstens ein Regalbrett vollständig über erfindungsgemäß ausgebildeten Beschlägen mit dem Regalständer bzw. den benachbarten Brettern verbunden ist. Dies ist z.B. wichtig, wenn sich die Geräte untereinander nicht durch dort erzeugten Körperschall stören sollen, wie dies bei empfindlichen Meßgeräten und/oder Audiogeräten der Fall ist, bei welchen die Verwendung von Korkzapfen sogar eine wirksame Bedämpfung der etwa durch Transformatorbrummen verursachten Gerätevibrationen bewirken und so zu einer Verbesserung der Klangwiedergabe führen kann.

Der in Fig. 26 veranschaulichte Kork-Zapfen 1 ist mit zwei voneinander und von den jeweiligen Stirnenden des Kork-Zapfens beabstandeten umlaufenden Ringwulsten 35 ausgerüstet. Mittels so ausgebildeter Kork-Zapfen gelingt eine formschlüssige Verbindung der Bauteile 36, 37, indem die Sacklochbohrung im Bauteil 36 und die Durchgangsbohrung im Bauteil 37 je mit einer entsprechend angeordneten und bemessenen Ringnut ausgerüstet sind, in die beim Einpressen des Korkzapfens 1 die radial von diesem vorstehenden Ringwulste 35 einrasten.

Der in Fig. 28 veranschaulichte Kork-Zapfen 1 ist mit vier gleichmäßig über seinen Umfang verteilt angeordneten Längsnuten 38 ausgerüstet, in denen längslaufende Lamellen 40 aufnehmbar sind, wie dies Fig. 29 zeigt. Derartige Lamellen können zur Distanzierung eingesetzt werden und verbessern darüber hinaus die Quersteifigkeit und/oder Scherfestigkeit des Kork-Zapfens 1. Alternativ zu der vorstehenden Variante ist es auch möglich, den Grundkörper aus festem und/oder steifem Material zu bilden und darin kompressible Lamellen vorzusehen, in Umkehrung der Materialwahl des beschriebenen Beispiels.

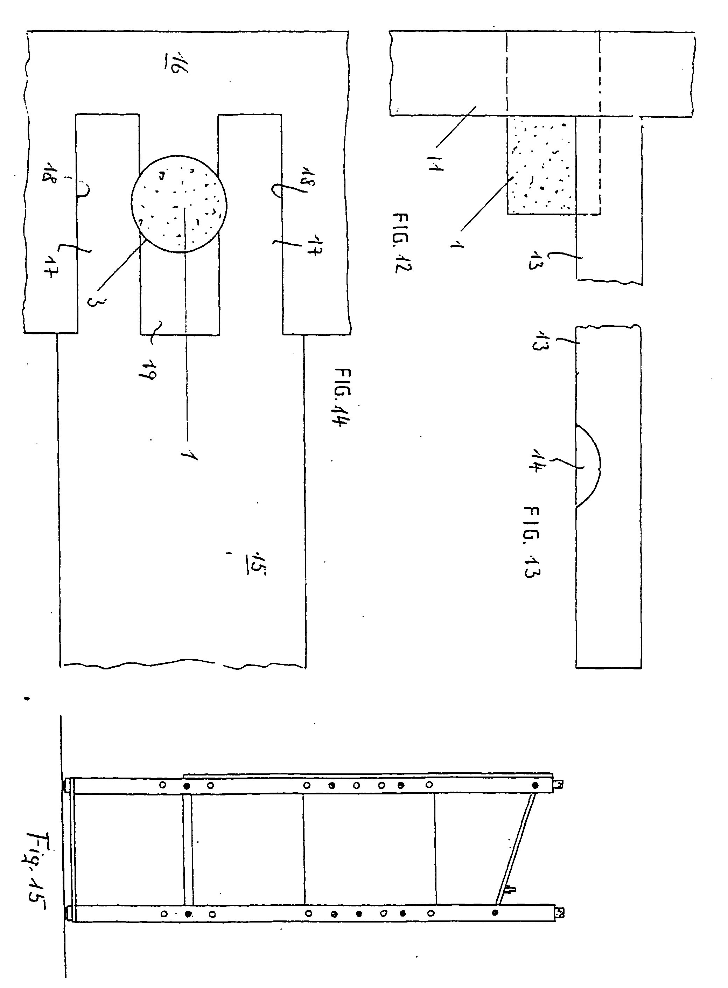

Die als Beschlagmittel dienenden Kork-Zapfen können aber auch als Spreizelemente ausgebildet sein. Mögliche Ausführungsformen sind in den Fig. 30 bis 33 veranschaulicht. Die eingesetzten Kork-Zapfen 1 weisen bei diesen Spreizelementen, wie der Kork-Zapfen gemäß Fig. 21, eine zentrale und durchgehende Längsausnehmung 25 auf.

Bei der Ausführungsform nach Fig. 30 erstreckt sich durch die Längsausnehmung eine Spannschraube 42 hindurch, die sich mit einem Schraubenkopf 43 an einem Stirnende des Zapfens 1 abstützt und in eine Gewindebohrung eines vom anderen Stirnende aus in die Längsausnehmung eingesetzten Spannkonus 44 eingeschraubt sowie mittels der Spannschraube 42 in die Längsausnehmung hineinziehbar ist. Logischerweise führt dies zu einer radialen Aufweitung des Kork-Zapfens 1 mit der Folge, daß über das einfache Einpressen des Kork-Zapfens in eine Aufnahmebohrung hinaus eine erhöhte Verspannung des Kork-Zapfens mit einer Aufnahmebohrung verwirklichbar ist.

Bei der Ausführungsform nach Fig. 31 dienen zwei mit gegensinnig ansteigenden Keilflächen versehene Spreizkörper 45, 46 als Spreizmittel, die von entgegengesetzten Stirnenden des Kork-Zapfens 1 in dessen Längsausnehmung 25 eintreibbar sind mit der Folge, daß beim Eintreiben der Spreizkörper 45, 46 in die Längsausnehmung 25 angesichts der gegenläufigen Keilflächen eine radiale Aufweitung des Kork-Zapfens über dessen gesamte Länge erfolgt.

Bei der Ausführungsform nach Fig. 32 dient als Spreizmittel ein von einem Stirnende des Kork-Zapfens 1 aus in dessen Längsausnehmung 25 eintreibbarer konischer Spannzapfen 48. Bei dieser Ausführungsform erfährt, ebenso wie in der Ausführungsform nach Fig. 30, der Kork-Zapfen 1 eine radiale Aufweitung insbesondere in den an die Eintreibseite angrenzenden Bereichen.

Bei der Ausführungsform nach Fig. 33 ist in einer Mittel-Längsausnehmung 25 des Kork-Zapfens 1 eine Spreizhülse 50 eingezogen, die im mittleren Bereich mit Längsschlitzungen 51 versehen und an einem Ende mit einer axialfest in der Hülse angeordneten Mutter 52 ausgerüstet ist. Neben der genannten Spreizhülse 50 umfassen die Spreizmittel dieser Ausführungsform eine Spannschraube 42, die in der aus Fig. 30 ersichtlichen Art sich mit einem Schraubenkopf 43 an dem von der Mutter 52 der Spreizhülse 50 entfernten Stirnende des Kork-Zapfens 1 abstützt und in die Mutter 52 eingeschraubt ist. Es ist ersichtlich, daß bei entsprechendem Einschrauben der Spannschraube 42 in die genannte Mutter 52 die Spreizhülse 50 eine axiale Verkürzung unter gleichzeitiger radialer Aufweitung der sich zwischen den im mittleren Hülsenbereich angeordneten Längsschlitzen 51 erstreckenden Stege erfährt, wodurch eine radiale Aufweitung des Kork-Zapfens 1 insbesondere im mittleren Bereich seiner Längenerstreckung erfolgt.

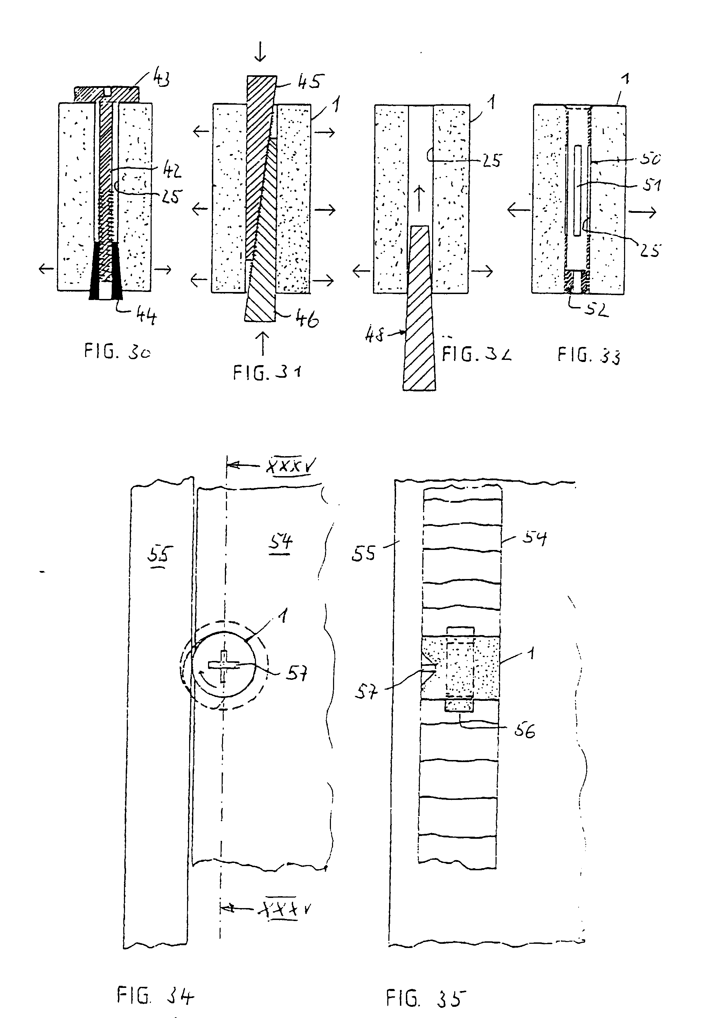

In den Fig. 34 und 35 ist das Verspannen zweier Bauteile 54, 55 gegeneinander mittels eines mit einem Spannexzenter 56 ausgerüsteten Kork-Zapfens 1 veranschaulicht. Der Spannexzenter 56 ist etwa in der Mitte der Längserstreckung des Kork-Zapfens 1 angeordnet und letzterer in einer Querbohrung am Rande des Bauteils 54 drehbar aufgenommen. In die Querbohrung ist eine den Abmessungen des Spannexzenters 56 entsprechende Nut eingestochen, und zwar derart, daß die Nut das betreffende Stirnende des Bauteils 54 durchbricht. Ferner ist von einem Stirnende des Zapfens 1 aus in diesen eine Kreuzschlitzaufnahme 57 eingebracht, die mit Hilfe eines Kreuzschlitzdrehers ein Verdrehen des Kork-Zapfens um seine Längsachse in der Aufnahmebohrung des Bauteils 54 erlaubt.

Insbesondere Fig. 34 zeigt, daß ein an das Bauteil 54 angrezendes Bauteil 55 mit dem Bauteil 54 in einfacher Weise verspannbar ist, in dem der mit dem Spannexzenter 56 ausgerüstete Kork-Zapfen in der ihn aufnehmenden Bohrung des Bauteils 54 entsprechend um seine Längsachse verdreht und dadurch der Spannexzenter 56 zur Zusammenwirkung mit dem Bauteil 55 gebracht wird.

## Patentansprüche

1. Beschlagsystem zum Verbinden von Werkstücken, zur Konstruktion und Ausstattung von Möbeln, Gebrauchsgegenständen, Inneneinrichtungen und dergleichen, gekennzeichnet durch ein mehrfachfunktionales Beschlagmittel in Form eines Zapfens (1) mit kreisförmigem Querschnitt, insbesondere eines Flaschenkorkens, der in einer seinem Querschnitt angepaßten Ausnehmung (3) eines ersten Bauteils (2) aufgenommen ist und mit einem über das erste Bauteil (2) vorstehenden Abschnitt in eine mit der Ausnehmung (3) des ersten Bauteils (4) fluchtende Ausnehmung (5) eines zweiten Bauteils (4) eingreift.

2. Beschlagsystem nach Anspruch 1, dadurch gekennzeichnet, daß der das Beschlagmittel bildende Zapfen (1) aus Korkmaterial, Papier, Kunststoff oder Recyclingmaterial besteht oder aus Verbundwerkstoffen hergestellt ist.

3. Beschlagsystem nach Anspruch 1 oder 2, dadurch gekennzeichnet, daß die Ausnehmungen (3, 5) im ersten und zweiten Bauteil (2, 4) als Bohrungen ausgebildet sind und insbesondere bevorzugt weiter dadurch gekennzeichnet, daß
bei platten- oder leistenförmigen Bauteilen die Ausnehmungen (3) im ersten und zweiten Bauteil als Durchgangsbohrungen ausgebildet sind,
wobei hierbei wiederum bevorzugt
der die Durchgangsbohrungen in den Bauteilen durchdringende Zapfen (1) jeweils auf der vom anderen Bauteil abgewandten Seite der Bauteile vorsteht
und/oder hierbei weiter bevorzugt
auf den vorstehenden Zapfenabschnitten Sicherungsmittel (20, 21, 24) aufgenommen sind,
und hierbei wiederum weiter bevorzugt
als Sicherungsmittel auf den vorstehenden Abschnitten des Zapfens Sprengringe (20) oder Gummiringe (21) aufgenommen oder Muttern (24) aufgeschraubt sind
und/oder hierbei bevorzugt
die Bauteile durch ein auf dem die Durchgangsbohrungen als Beschlagmittel durchdringenden Zapfen aufgenommenes Distanzmittel, etwa eine Hülse, beabstandet voneinander gehalten sind.

4. Beschlagsystem nach dem vorhergehenden Anspruch, wobei der das Beschlagmittel bildende Zapfen (1) zumindest in der Bohrung (3) eines der Bauteile mit Preßsitz aufgenommen ist
und worin weiter vorzugsweise
der das Beschlagmittel bildende Zapfen (1) in die Bohrung eines Bauteils mit begrenztem Spiel eingreift und dadurch dieses Bauteil gegenüber dem anderen Bauteil um den Zapfen als Drehachse drehbar lagert
und/oder alternativ vorzugsweise
in der Bohrung eines der Bauteile ein Lagerelement (22, 23), etwa ein Kugel- oder Rollenlager, und dieses auf dem in die Bohrung eingreifenden Abschnitt des das Beschlagmittel bildenden Zapfens (1) aufgenommen ist.

5. Beschlagsystem nach einem der vorhergehenden Ansprüche, dadurch gekennzeichnet, daß in wenigstens einem der Bauteile die den Zapfen als Beschlagmittel aufnehmende Bohrung bzw. die Bohrung, in die der vom anderen Bauteil vorstehende Zapfenabschnitt eingreift, als Sacklochbohrung ausgebildet ist.

6. Beschlagsystem nach einem der vorhergehenden Ansprüche, der von dem einen Bauteil (11) vorstehende Abschnitt des das Beschlagmittel bildenden Zapfens (1) ein Auflager für einen Fachboden (13) bildet, wobei bevorzugt der als Fachboden-Auflager dienende Abschnitt des Zapfens (1) in eine der Zapfenkontur angepaßte unterseitige Ausfräsung (14) des Fachbodens (13) eingreift.

7. Beschlagsystem nach einem der vorhergehenden Ansprüche, gekennzeichnet durch die Verbindung eines rohrförmigen Bauteils (12), insbesondere einer Kleiderstange, mit einem anderen Bauteil (11), indem ein in einer Bohrung des letztgenannten Bauteils mit Preßsitz aufgenommener Zapfen (1) als Beschlagmittel mit einem Abschnitt von dem genannten Bauteil vorsteht und stirnseitig in das rohrförmige Bauteil (12) eingreift.

8. Beschlagsystem nach einem der vorhergehenden Ansprüche, dadurch gekennzeichnet, daß der Zapfen (1) als Sicherungsmittel für eine Steckverbindung von zwei Bauteilen (15, 16) dient, indem der Zapfen (1) in einer im Bereich der Steckverbindung angeordneten Bohrung (3) des einen Bauteils (16) aufgenommen ist und abschnittsweise in Bohrungsbereiche eingreift, die sich in dem anderen Bauteil (15) erstrecken.

9. Beschlagsystem nach einem der vorhergehenden Ansprüche, dadurch gekennzeichnet, daß der das Beschlagmittel bildende Zapfen eine zentrale Längsausnehmung (25) aufweist und daß in der Längsausnehmung ein den Zapfen (1) versteifender Kern (26) oder wenigstens ein Spreizmittel aufgenommen ist
und daß es sich bevorzugt
bei dem Spreizmittel um eine sich durch die Längsausnehmung (25) im Zapfen (1) hindurcherstreckende, mit einem Kopf (43) an einem Zapfenstirnende abstützende Spannschraube (42) und um einen mittels dieser Spannschraube vom anderen Zapfenstirnende aus in die Längsausnehmung (25) einziehbaren Spannkonus (44) handelt
oder alternativ bevorzugt
als Spreizmittel ein konischer Spannzapfen (48) dient, der von einer Zapfenstirnseite aus in die Längsausnehmung (25) des Zapfens (1) eintreibbar ist
oder alternativ
als Spreizmittel ein Doppelkeil mit zwei Spreizkörpern (45, 46) dient, die mit in Längsrichtung gegenläufig ansteigenden Keilflächen aneinander anliegen und von entgegengesetzten Stirnenden des Zapfens (1) aus in dessen Längsausnehmung (25) eintreibbar sind
oder alternativ
das Spreizmittel eine in der Längsausnehmung (25) des Zapfens (1) aufgenommene Spreizhülse (50), die im Mittelteil mit Längsschlitzungen und auf einer Seite von den Längsschlitzungen mit einer axial fest in der Spreizhülse angeordneten Mutter (52) ausgerüstet ist, und eine sich durch die Spreizhülse hindurch erstreckende Spannschraube (42), die in die Mutter (52) der Spreizhülse (50) eingeschraubt ist und sich mit einem Schrauben-Kopf (43) an dem von der Mutter (52) abgewandten Zapfenstirnende abstützt, umfaßt.

10. Beschlagsystem nach einem der vorhergehenden Ansprüche, dadurch gekennzeichnet, daß der das Beschlagmittel bildende Zapfen (1) als fester Kern insbesondere aus Holz, Aluminium, Kunststoff oder einem anderen festen Material ausgebildet und mit einem kompressiblen Mantel insbesondere aus Kork versehen ist oder alternativ,
mit wenigstens drei peripheren Längsschlitzen (38),
die vorzugsweise unter gleichen Winkelabständen über den Zapfenumfang verteilt sind,
versehen ist und wobei in den Längsschlitzen (38) den Zapfen (1) versteifende Lamellen (40) aufnehmbar sind
oder alternativ
der das Beschlagmittel bildende Zapfen mit wenigstens zwei umlaufenden Ringwulsten (35) versehen ist, die axial voneinander und jeweils von den Zapfenstirnenden beabstandet angeordnet sind und beim Verbinden zweier Bauteile (36, 37) in entsprechende Ringnuten, die in die den Zapfen (1) dann aufnehmenden Bohrungen in den Bauteilen angeordnet sind, einrasten,
oder alternativ
der das Beschlagmittel bildende Zapfen (1) tailliert ausgebildet ist oder alternativ der das Beschlagmitte bildende Zapfen abgestuft ausgebildet ist und im Übergangsbereich zwischen den beiden unterschiedliche Durchmesser aufweisenden Zapfenabschnitten (30, 31) eine umlaufende Schulter (32) besitzt.

11. Beschlagsystem nach einem der vorhergehenden Ansprüche, dadurch gekennzeichnet, daß der das Beschlagmittel bildende Zapfen (1) mit einem Exzenter (56) versehen und drehbar in einer angepaßten Ausnehmung eines Bauteils (54) derart aufgenommen ist, daß in Abhängigkeit von der Drehstellung des Zapfens (1) dessen Exzenter (56) mehr oder weniger über eine stirnendige Begrenzung des genannen Bauteils (54) vorsteht und mit einem angrenzenden Bauteil (55) verspannbar ist.
